Europäisches Patentamt

European Patent Office

Office européen des brevets

(11) Publication number: **0 503 069 A1**

# EUROPEAN PATENT APPLICATION
## published in accordance with Art. 158(3) EPC

(21) Application number: **91913821.4**

(22) Date of filing: **31.07.91**

(86) International application number:
**PCT/JP91/01024**

(87) International publication number:
**WO 92/02870 (20.02.92 92/05)**

(51) Int. Cl.5: **G05B 19/18**, G05B 19/05

(30) Priority: **06.08.90 JP 208500/90**

(43) Date of publication of application:
**16.09.92 Bulletin 92/38**

(84) Designated Contracting States:
**CH DE IT LI**

(71) Applicant: **FANUC LTD.**
**3580, Shibokusa Aza-Komanba, Oshino-mura**
**Minamitsuru-gun, Yamanashi 401-05(JP)**

(72) Inventor: **IKEDA, Yoshiaki, Room 6-310, Fanuc**

Manshonharimomi
3537-1, Shibokusa, Oshino-mura,
Minamitsuru-gun
Yamanashi 401-05(JP)
Inventor: **AIZAWA, Yasuharu**
2166, Kodachi, Kawaguchiko-machi
Minamitsuru-gun, Yamanashi 401-03(JP)

(74) Representative: **Billington, Lawrence Emlyn**
**Haseltine Lake & Co Hazlitt House 28,**
**Southampton Buildings Chancery Lane**
**London WC2A 1AT(GB)**

(54) **METHOD OF TRANSFERRING AND PROCESSING SERIAL DATA AND DEVICE THEREOF.**

(57) A signal (21) sent from the machine and including a specified signal requiring high speed transfer and high speed processing and ordinary signals other than it is received by a transmission circuit which is common to the specified signal and the ordinary signals and comprises a receiver (22) and a circuit (23) for controlling serial transfer. When an interruption signal (13a) is sent out from a timer (13) for monitoring high speed signals of a numerically controlled equipment (10), serial signals (24) of one cycle, which are transmitted from the circuit (23) to a circuit (11) for controlling transfer in the numerically controlled equipment and are transferred serially from the circuit (11) to a memory (12) by a direct memory system, are processed by a routine high speed signal processing in a processor (14). According to signal processing routine end signal (14a) from the processor, serial signals of the next cycle sent from the transmission circuit are received by the circuit (11), and are transferred to the memory.

FIG.2

EP 0 503 069 A1

Technical Field

The present invention relates to serial data transfer and processing, and more particularly, to a serial data transfer and processing method and an apparatus therefor, capable of carrying out signal transfer from a machine to a numerical control device and transfer signal processing in the numerical control device at high speed.

Background Art

It is a known technique to control various machines by means of a control system which is provided with a numerical control device. The numerical control device receives signals from sensors, switches, etc., which are attached to the machines, through transmission circuits which are interposed between the machines and the numerical control device. A typical transmission circuit is composed of a receiver for receiving the signals from a machine and a serial transfer control circuit for transferring the input signals to the numerical control device. The numerical control device includes, for example, a serial transfer control circuit for receiving the signals from the serial transfer control circuit of the transmission circuit and signal processing means for processing the input signals. Based on the input signals, the numerical control device executes various processes, such as detection, discrimination, arithmetic operation, etc., and generates control outputs for driving various actuators of the machine.

The input signals from the machine include signals (hereinafter referred to as high-speed signals) transferred from the machine to the numerical control device at high speed and expected to be processed at high speed in the numerical control device, e.g., a tool length measurement signal from a tool detecting switch, and other ordinary input signals. Various troubles will be caused if high-speed transfer and high-speed processing of the high-speed signals cannot be achieved. In order to measure the length of a tool accurately, for example, the numerical control device must quickly detect the arrival of the tool at the position of the tool detecting switch. Thus, the tool length cannot be accurately measured unless the tool length measurement signal from the tool detecting switch can be transferred to the numerical control device at high speed, and that the tool length detection signal can be processed at high speed in the numerical control device.

Conventionally, therefore, the transmission circuit and the signal processing means are used for the transfer and processing of ordinary signals. Conventionally provided, moreover, are a receiver for receiving the high-speed signals and high-speed signal processing means for processing the high-speed signals, for example. However, the conventional control system, which includes special circuit elements for transferring and processing the high-speed signals arranged independently of circuit elements for transferring and processing the ordinary input signals, is inevitably complicated in construction.

Disclosure of the Invention

The object of the present invention is to provide a serial data transfer and processing method and an apparatus therefor, in which specific signals from a machine as an object of control, which require high-speed transfer and high-speed processing, can be transferred from the machine to a numerical control device at high speed by means of a circuit element common to the specific signals and other ordinary signals, and in which the special signals can be processed at high speed in the numerical control device.

In order to achieve the above object, according to one aspect of the present invention, there is provided a serial data transfer and processing method applied to a control system for controlling a machine in accordance with signals from the machine, including specific signals, which require high-speed transfer and high-speed processing, and other ordinary signals. This serial data transfer and processing method comprises: (a) cyclically starting a serial transfer control circuit of a numerical control device and cyclically entering the signals from the machine in the serial transfer control circuit through a transmission circuit common to the specific signals and the ordinary signals, thereby cyclically serially transferring the signals from the machine to the numerical control device; and (b) processing the serially transferred signals in accordance with a high-speed signal processing routine by means of the numerical control device.

Preferably, the signals entered in the serial transfer control circuit are serially transferred to a memory of the numerical control device to be stored in the memory, and are read out when the high-speed signal processing routine is executed.

Further preferably, the high-speed signal processing routine and the serial transfer of the signals from the serial transfer control circuit to the memory are alternately executed. Also, the starting cycle of the serial transfer control circuit is longer than the sum of the time required for the high-speed signal processing routine and the time required for the serial transfer of the signals from the serial transfer control circuit to the memory.

According to another aspect of the present invention, there is provided a serial data transfer and processing apparatus in a control system for controlling a machine in accordance with signals from the machine, including specific signals, which require high-speed transfer and high-speed processing, and other ordinary signals. This serial data transfer and processing apparatus comprises: a transmission circuit common to the specific signals and the ordinary signals, among the signals from the machine; and a numerical control device connected to the transmission circuit, the numerical control device including a serial transfer control circuit for receiving the signals from the transmission circuit, a memory for storing the signals from the serial transfer control circuit, starting signal generating means for cyclically delivering a first starting signal, and signal processing means for processing the signals read out from the memory in a high-speed signal processing routine in response to the first starting signal, and delivering a second starting signal for starting the serial transfer control circuit to the serial transfer control circuit on completion of the high-speed signal processing routine, the serial transfer control circuit being adapted to serially transferring the received signals to the memory in response to the second starting signal.

Preferably, the starting signal generating means delivers the first starting signal in a cycle longer than the sum of the time required for the high-speed signal processing routine and the time required for the serial transfer of the signals from the serial transfer control circuit to the memory.

According to the present invention, as described above, the specific signals and the ordinary signals, cyclically entered from the machine, are cyclically processed in accordance with the high-speed signal processing routine by means of the numerical control device, so that the signals from the machine can be transferred to the numerical control device at high speed, and the transferred signals can be processed at high speed. Also, both the specific signals and the ordinary signals from the machine are entered in the numerical control device through the transmission circuit which is common to these signals, so that an exclusive-use transmission circuit for the specific signals need not be provided independently of a transmission circuit for the ordinary signals. Furthermore, both the specific signals and the ordinary signals are processed in accordance with the high-speed signal processing routine by means of the numerical control device, so that exclusive-use signal processing routine means for the specific signals need not be provided independently of signal processing means for the ordinary signals. Thus, the construction of the control system is simple.

Preferably, the serial transfer of the signals, entered in the serial transfer control circuit, to the memory and the high-speed signal processing routine are alternately executed, and the sum of the time required for the high-speed signal processing routine and the time required for the serial transfer is made shorter than the starting cycle of the serial transfer control circuit, so that the signals delivered from the machine can be transferred from the machine to the numerical control device and processed in the numerical control device substantially within the starting cycle of the serial transfer control circuit.

Brief Description of the Drawings

Fig. 1 is a block diagram illustrating a conventional control system;
Fig. 2 is a block diagram showing a control system for carrying out a serial data transfer and processing method according to one embodiment of the present invention;
Fig. 3 is a flow chart showing serial data transfer and processing operation of a numerical control device shown in Fig. 2; and
Fig. 4 is a time chart showing operation timing for the serial data transfer and processing operation of the numerical control device.

Best Mode of Carrying Out the Invention

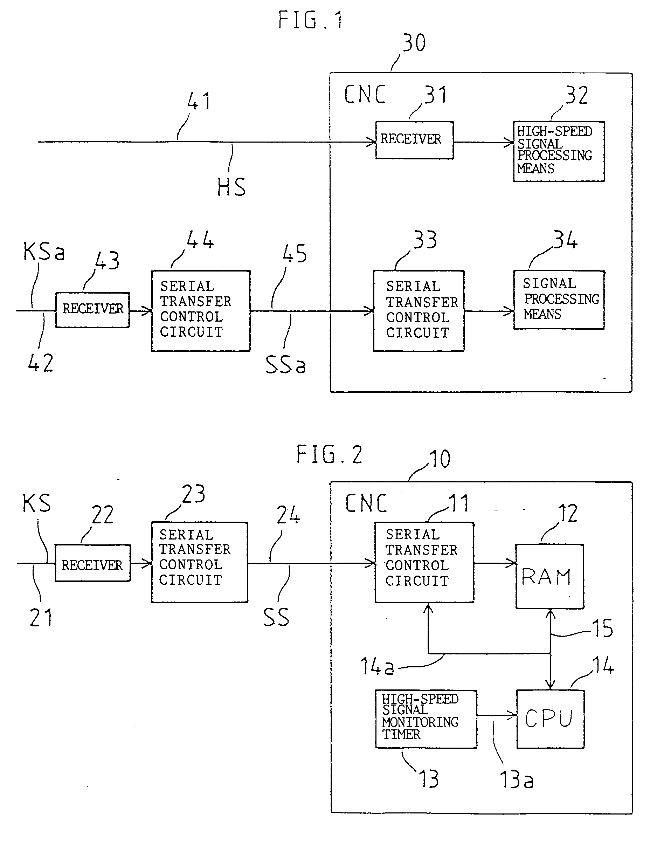

Referring to Fig. 1, ordinary signals (KSa) 42 from a machine (not shown), in a typical conventional control system, are received by an exclusive-use receiver 43 for ordinary signals, and are converted into serial signals (SSa) 45 by means of an exclusive-use serial transfer control circuit 44 for ordinary signals. The transfer signals 45 are received by an exclusive-use serial transfer control circuit 33 for ordinary signals, which is arranged in a numerical control device (CNC) 30, and are processed by exclusive-use signal processing means 34 for ordinary signals, which is arranged in the numerical control device (CNC) 30. Meanwhile, high-speed signals (HS) 41 from the machine, which require high-speed transfer and high-speed processing, are received by an exclusive-use receiver 31 for high-speed signals, which is arranged in the numerical control device 30, and are processed by exclusive-use high-speed signal processing means 32 for high-speed signals. Thus, the transfer of the high-speed signals 41 is not subject to a substantial delay, and the received signals are processed at high speed. The conventional control system of Fig. 1, however, has a complicated construction, requiring special elements 31 and 32 for transferring and processing the high-speed signals, besides the elements 43, 44, 33 and 34 for the transfer and processing of the ordinary signals.

Referring now to Fig. 2, a control system for carrying out a serial data transfer and processing method according to one embodiment of the present invention will be described.

The control system is provided with a numerical control device (CNC) 10 for processing signals received from a machine (not shown) as an object of control. The signals (KS) 21 from the machine include signals (hereinafter referred to as high-speed signals) transferred from the machine to the numerical control device 10 at high speed and expected to be processed at high speed in the numerical control device, e.g., a tool length measurement signal from a tool detecting switch, and other ordinary input signals. Further, the control system is provided with a common transmission circuit for high-speed signals and ordinary signals interposed between the machine and the numerical control device 10. The transmission circuit includes a receiver 22 for receiving the signals 21 from the machine and a serial transfer control circuit 23 for converting the received signals into serial signals (SS) 24.

More specifically, the numerical control device 10 includes a serial transfer control circuit 11 for receiving the serial signals 24, transferred from the serial transfer control circuit 23 of the transmission circuit, and random access memory (RAM) 12 for storing the serial signals 24 transferred from the circuit 11. The serial transfer control circuit 11 contains a built-in DMA controller (not shown) for transferring the serial signals 24 to the RAM 12 by the direct memory access method. Further, the numerical control device 10 includes a processor (CPU) 14 for processing the serial signals 24 at high speed and a high-speed signal monitoring timer 13 for delivering an interrupt signal 13a to the CPU 14 in a predetermined cycle, the elements 11 to 13 being connected to the CPU 14 by means of a bus 15. In response to the interrupt signal 13a, the CPU 14 processes the serial signals 24 read out from the RAM 12 in accordance with a high-speed signal processing routine, and delivers a processing end signal 14a when this routine is finished.

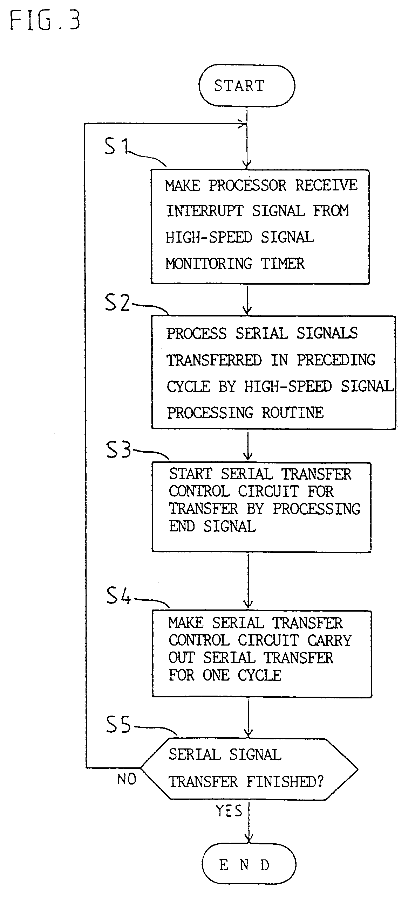

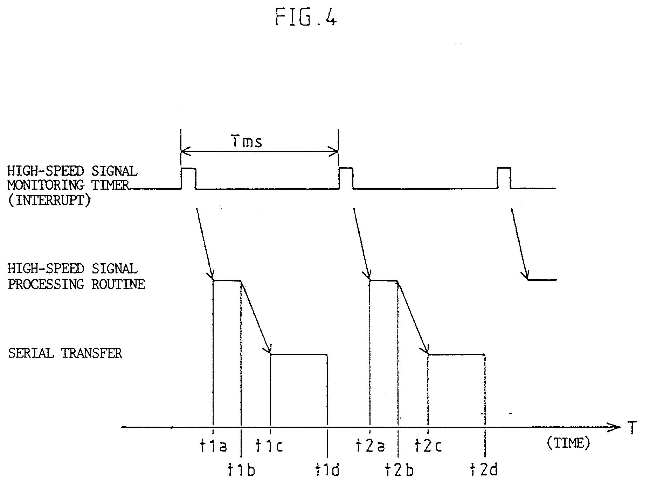

Referring now to Figs. 3 and 4, serial data transfer and processing operation of the control system of Fig. 2 will be described.

The signals 21 including the high-speed signals are generated as various sensors and switches, such as tool detecting switches, are activated, during the operation of the machine, and are transmitted to the serial transfer control circuit 23 of the transmission circuit through the receiver 22 of the transmission circuit. The transfer control circuit 23 converts the received signals 21 into the serial signals 24, and delivers a status signal (not shown), indicative of a data reception request, to the numerical control device 10 on receiving the signals 21.

The processor 14 of the numerical control device 10 continually monitors the presence of the data reception request signal from the transmission circuit. If the generation of the data reception request signal is detected, the serial data transfer and processing operation shown in Fig. 3 is started.

When the generation of the interrupt signal 13a delivered from the high-speed signal monitoring timer 13 to the bus 15 in a predetermined cycle Tmsec (Fig. 4) is detected during the serial data transfer and processing operation (Step S1 of Fig. 3), the processor 14 reads out the serial signals 24, stored in the RAM 12 in the preceding processing cycle, from the RAM 12 through the bus 15, and processes the read signals 24 at high speed within, e.g., a period between times t1a and t1b shown in Fig. 4 in accordance with the high-speed signal processing routine (Step S2). In the first processing cycle of the serial data transfer and processing operation, the serial signal processing in Step S2 is not executed, virtually. Then, the processor 14 applies the high-speed signal processing routine end signal 14a to the serial transfer control circuit 11 through the bus 15, thereby starting the transfer control circuit 11 (Step S3).

The serial transfer control circuit 11 first requests the delivery of the serial signals from the serial transfer control circuit 23 of the transmission circuit. In response to this, the transfer control circuit 23 transmits the serial signals 24 for one cycle to the transfer control circuit 11. The transfer control circuit 11 serially transfers the serial signals 24 for one cycle, received from the transfer control circuit 23, to the RAM 12 within a period between times t1c and t1d shown in Fig. 4 by the DMA method without the use of the processor 14 (Step S4). Thus, as seen from Fig. 4, processing the serial signals 24 for one cycle, transferred from the serial transfer control circuit 11 to the RAM 12 in the preceding processing cycle, in accordance with the high-speed signal processing routine, and serial transfer of the serial signals 24 for one cycle, transferred from the circuit 11 to the RAM 12 in the present processing cycle, are finished before the next interrupt signal 13a is delivered from the high-speed signal monitoring timer 13. In other words, the cycle of generation of the interrupt signal 13a from the high-speed signal monitoring timer 13 is set longer than the sum of the time required for the execution of the high-speed signal processing routine and the time required for the serial transfer.

Then, the processor 14 determines whether or not the RAM 12 is loaded with the serial signals 24, thereby determining whether or not the serial data transfer and processing are finished (Step S5). If the result of decision is NO, the program returns to Step S1 to stand ready for the generation of the next interrupt signal 13a. When the next interrupt signal 13a is generated, the high-speed signal processing routine for the serial signals 24 for one cycle (serial signals transferred within the period between times t1c and t1d, in this case) is executed within a period between times t2a and t2b. Then, the serial transfer of the serial signals 24 for one cycle from the transfer control circuit 11 to the RAM 12 is executed, as required, for the present processing cycle, within a period between times t2c and t2d.

Thereafter, the aforementioned high-speed signal processing routine and serial transfer are repeated as required. When the transmission of the serial signals for the last cycle from the transmission circuit to the numerical control device 10 ends, the data reception request of the numerical control device 10 by the transmission circuit is canceled. Subsequently, the high-speed signal processing routine for the serial signals 24 for the last cycle is executed, whereupon the signal processing of the numerical control device 10 ends. Thus, in Step S5 which directly follows this process, the end of the serial data transfer and processing is discriminated, whereupon the process of Fig. 3 is finished. Thereafter, the processing of Fig. 3 is executed every time the data reception request is made by the transmission circuit.

## Claims

1. In a serial data transfer and processing method applied to a control system for controlling a machine in accordance with signals from the machine, including specific signals, which require high-speed transfer and high-speed processing, and other ordinary signals, the serial data transfer and processing method comprising:

   (a) cyclically starting a serial transfer control circuit of a numerical control device and cyclically entering the signals from said machine in said serial transfer control circuit through a transmission circuit common to said specific signals and said ordinary signals, thereby cyclically serially transferring the signals from said machine to said numerical control device; and

   (b) processing said serially transferred signals in accordance with a high-speed signal processing routine in said numerical control device.

2. A serial data transfer and processing method according to claim 1, wherein said signals entered in said serial transfer control circuit are serially transferred to a memory of said numerical control device to be stored in said memory, and are read out when said high-speed signal processing routine is executed.

3. A serial data transfer and processing method according to claim 2, wherein said high-speed signal processing routine and the serial transfer of said signals from said serial transfer control circuit to said memory are alternately executed.

4. A serial data transfer and processing method according to claim 1, wherein the starting cycle of said serial transfer control circuit is longer than the sum of the time required for said high-speed signal processing routine and the time required for the serial transfer of the signals from said serial transfer control circuit to said memory.

5. In a serial data transfer and processing apparatus in a control system for controlling a machine in accordance with signals from the machine, including specific signals, which require high-speed transfer and high-speed processing, and other ordinary signals, the serial data transfer and processing apparatus comprising:

   a transmission circuit common to both said specific signals and said ordinary signals, among the signals from said machine; and

   a numerical control device connected to said transmission circuit,

   said numerical control device including a serial transfer control circuit for receiving the signals from said transmission circuit, a memory for storing the signals from said serial transfer control circuit, starting signal generating means for cyclically delivering a first starting signal, and signal processing means for processing the signals read out from said memory in a high-speed signal processing routine in response to said first starting signal, and delivering a second starting signal for starting said serial transfer control circuit to said serial transfer control circuit on completion of said high-speed signal processing routine, said serial transfer control circuit being adapted to serially transferring the received signals to said memory in response to said second starting signal.

6. A serial data transfer and processing apparatus according to claim 5, wherein said starting signal generating means delivers said first starting signal in a cycle longer than the sum of the time required for said high-speed signal processing routine and the time required for the serial transfer of the signals from said serial transfer control circuit to said memory.

FIG.1

30

CNC

41 31 32

RECEIVER | HIGH-SPEED SIGNAL PROCESSING MEANS

HS

KSa 44 45 33 34

43

RECEIVER | SERIAL TRANSFER CONTROL CIRCUIT | SERIAL TRANSFER CONTROL CIRCUIT | SIGNAL PROCESSING MEANS

42 SSa

FIG.2

10

CNC

KS 23 24 11 12

22

RECEIVER | SERIAL TRANSFER CONTROL CIRCUIT | SERIAL TRANSFER CONTROL CIRCUIT | RAM

21 SS

15

14a

14

HIGH-SPEED SIGNAL MONITORING TIMER | CPU

13 13a

6

FIG.3

```
        ┌─────────┐
        │  START  │
        └─────────┘
             │
             ▼
  S1 ┌───────────────────────┐
     │ MAKE PROCESSOR RECEIVE │
     │ INTERRUPT SIGNAL FROM  │
     │ HIGH-SPEED SIGNAL      │
     │ MONITORING TIMER       │
     └───────────────────────┘
             │
             ▼
  S2 ┌───────────────────────┐
     │ PROCESS SERIAL SIGNALS │
     │ TRANSFERRED IN PRECEDING│
     │ CYCLE BY HIGH-SPEED SIGNAL│
     │ PROCESSING ROUTINE     │
     └───────────────────────┘
             │
             ▼
  S3 ┌───────────────────────┐
     │ START SERIAL TRANSFER  │
     │ CONTROL CIRCUIT FOR    │
     │ TRANSFER BY PROCESSING │
     │ END SIGNAL             │
     └───────────────────────┘
             │
             ▼
  S4 ┌───────────────────────┐
     │ MAKE SERIAL TRANSFER   │
     │ CONTROL CIRCUIT CARRY  │
     │ OUT SERIAL TRANSFER    │
     │ FOR ONE CYCLE          │
     └───────────────────────┘
             │
             ▼
  S5 ╱─────────────────────────╲
     │   SERIAL SIGNAL          │
  NO │  TRANSFER FINISHED?      │
     ╲─────────────────────────╱
             │ YES
             ▼
        ┌─────────┐
        │  E N D  │
        └─────────┘
```

FIG.4

HIGH-SPEED SIGNAL
MONITORING TIMER
(INTERRUPT)

Tms

HIGH-SPEED SIGNAL
PROCESSING ROUTINE

SERIAL TRANSFER

T
(TIME)

t1a  t1c   t2a  t2c

t1b    t1d    t2b    t2d

# INTERNATIONAL SEARCH REPORT

International Application No PCT/JP91/01024

| I. CLASSIFICATION OF SUBJECT MATTER (if several classification symbols apply, indicate all) ⁶ |
|---|
| According to International Patent Classification (IPC) or to both National Classification and IPC |

Int. Cl⁵  G05B19/18, 19/05

## II. FIELDS SEARCHED

Minimum Documentation Searched ⁷

| Classification System | Classification Symbols |
|---|---|
| IPC | G05B19/18, 19/05 |

Documentation Searched other than Minimum Documentation
to the Extent that such Documents are Included in the Fields Searched ⁸

| | |
|---|---|
| Jitsuyo Shinan Koho | 1971 – 1991 |
| Kokai Jitsuyo Shinan Koho | 1971 – 1991 |

## III. DOCUMENTS CONSIDERED TO BE RELEVANT ⁹

| Category * | Citation of Document, ¹¹ with Indication, where appropriate, of the relevant passages ¹² | Relevant to Claim No. ¹³ |
|---|---|---|
| Y | JP, A, 02-12402 (Okuma Machinery Works, Co., Ltd.), January 17, 1990 (17. 01. 90), (Family: none) | 1-6 |
| Y | JP, A, 01-239605 (Omron Corp.), September 25, 1989 (25. 09. 89), (Family: none) | 1-6 |

* Special categories of cited documents: ¹⁰

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| October 24, 1991 (24. 10. 91) | November 5, 1991 (05. 11. 91) |
| International Searching Authority | Signature of Authorized Officer |
| Japanese Patent Office | |

Form PCT/ISA/210 (second sheet) (January 1985)